# EUROPÄISCHE PATENTSCHRIFT

(11) **EP 0 896 791 B1**
(45) Veröffentlichungstag und Bekanntmachung des Hinweises auf die Patenterteilung: **23.02.2005**
(21) Anmeldenummer: 98114187.2
(22) Anmeldetag: 29.07.1998
(51) Int. Cl.: A01N 25/08, A01N 25/10, A01N 51/00, A01N 57/24, A01N 57/16, A01N 57/12, A01N 53/00, A01N 47/40, A01N 47/34, A01N 43/86, A01N 43/78, A01N 43/68, A01N 43/54, A01N 43/50, A01N 43/40, A01N 37/52

(54) **Mittel gegen holzzerstörende Insekten**
Composition against wood destroying insects
Composition contre les insectes détruisant le bois

(30) Priorität: 11.08.1997 DE 19734665
(43) Veröffentlichungstag der Anmeldung: 17.02.1999
(73) Patentinhaber: Bayer CropScience AG, 40789 Monheim (DE)
(72) Erfinder: Anderson, John-Phillip-Evans, Dr., 40764 Langenfeld (DE); Keuken, Oliver, Dr., 50968 Köln (DE)

(56) Entgegenhaltungen:
- EP-A- 0 080 516
- EP-A- 0 250 751
- EP-A- 0 279 207
- WO-A-90/14004
- WO-A-95/18532
- WO-A-97/17847
- WO-A-98/19532
- WO-A-98/21960
- US-A- 5 087 632

## Beschreibung

Die vorliegende Erfindung betrifft lang wirkende Mittel gegen holzzerstörende Insekten, ihre Herstellung und ihre Verwendung.

Es ist bekannt, die Wirkdauer von Pflanzenschutzmitteln dadurch zu verlängern, dass man Wirkstoff chemisch an hydroxylgruppenhaltige Holzderivate wie Sägemehl, Rinde oder Lignin bindet. Zur Herstellung der entsprechenden Holzderivat-Wirkstoff-Komplexe waren jedoch aufwendige chemische Umsetzungen erforderlich (Tappi/August 1971, Vol. 54, No. 8 S. 1293-1294; FR-P 1 544 406).

Es ist außerdem bekannt geworden, dass sich die Wirkung von Insektiziden verlängern lässt, wenn sie kurz nach einer Düngung mit organischen Düngern wie Mist, Kompost etc. in Boden angewendet werden (Archives of Environmental Contamination and Toxicology (1996) Vol. 31, No.1 S. 98-106).

Es ist außerdem bekannt geworden, UV-empfindliche Pflanzenschutzwirkstoffe durch Zusatz von Lignin vor UV-Abbau zu schützen (WO 97/15 187).

Es ist außerdem bekannt geworden, bestimmten Wirkstoffen aus der Gruppe der Nicotinoyl-Insektizide Polyoxyalkylen-Derivate als Stabilisatoren zuzusetzen (EP-B 431 361).

Es sind außerdem Köder gegen Bodeninsekten, wie Termiten, bekannt geworden, die neben Wirkstoffen aus der Gruppe der Nicotinoyl-Insektizide Kulturmedium für Pilze enthalten (ZA-P 94-7242).

Ferner sind aus WO 97/17847 Systeme aus Polysaccharidetherestern und agrochemischen Wirkstoffen bekannt. Aus EP 279 207 ist bekannt, dass Holzmehl als Trägermaterial die Stabilität von Organophosphorinsektiziden erhöht. Ein ähnlicher Effekt wird in EP 250 751 für verschiedene Holzmehlarten als Trägermaterial für Pyrethroide beschrieben. Verschiedene natürlich vorkommende Materialien sind in US 5.087.632 als Trägermaterialien für bestimmte Nitromethylen-, Nitroimino- und Cyaniminoverbindungen genannt (siehe auch WO 95/28370).

Beim Schutz holzhaltiger Materialien gegen Zerstörung durch Insekten ist eine lang anhaltende Wirkung der Wirkstoffe, vor allem im Boden, entscheidend. Vielfach ist die Wirkdauer der eingesetzten Insektizide wegen ihres Abbaus durch Bodenmikroorganismen für den Schutz von Gebäuden zu kurz.

Die vorliegende Erfindung betrifft:
1. Mittel gegen holzzerstörende Insekten, die dadurch gekennzeichnet sind, dass sie
   a) einen insektiziden Wirkstoff aus der Reihe der Verbindungen der Formeln 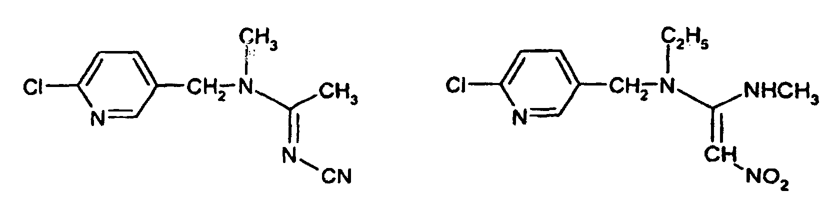 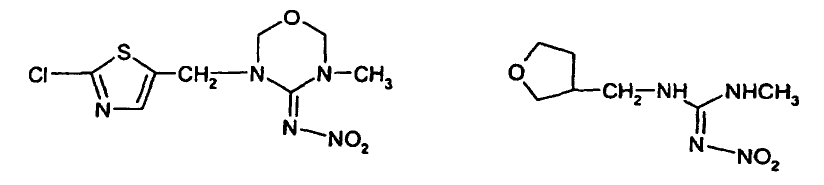 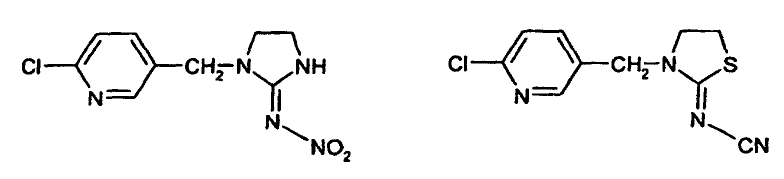 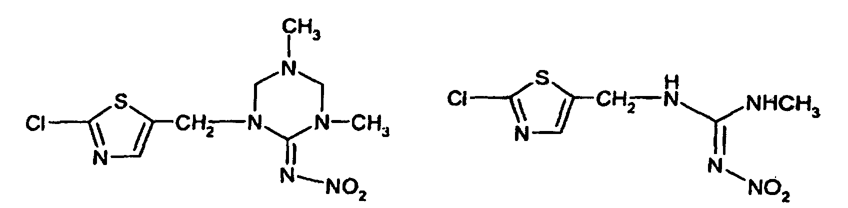
   b) ein Trägermaterial mit einer Korngröße von maximal 10 mm, wobei das Trägermaterial ein organischer Naturstoff oder organisch synthetischer Stoff aus der Reihe Sägemehl, Holzspäne oder -schnitzel, Rindenmulch, -späne oder -schnitzel, Torf, Lignin, Kokosfiber und Kokosmehl ist,
   c) gegebenenfalls mikrobizide Wirkstoffe,
   d) gegebenenfalls Lockstoffe oder entwicklungshemmende Stoffe für Insekten und
   e) gegebenenfalls Formulierhilfsmittel enthalten.
2. Mittel gemäß Anspruch 1, dadurch gekennzeichnet, dass als insektizider Wirkstoff Imidachloprid der Formel 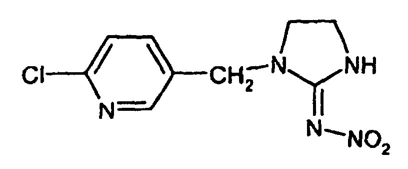 verwendet wird.
3. Mittel gemäß Anspruch 1, dadurch gekennzeichnet, dass als insektizider Wirkstoff die Verbindung der Formel 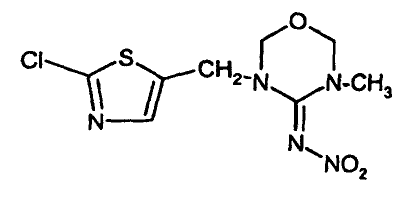 verwendet wird.
4. Mittel gemäß Anspruch 1, dadurch gekennzeichnet, dass als insektizider Wirkstoff die Verbindung der Formel 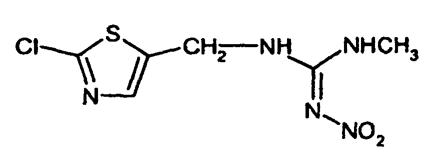 verwendet wird.
5. Mittel gemäßAnspruch 1, dadurch gekennzeichnet, dass es sich bei den holzzerstörenden Insekten um Termiten handelt.
6. Mittel gemäß Anspruch 1, dadurch gekennzeichnet, dass sie in wasserlösliche Polymerfolien verpackt und in verpackter Form angewendet werden.
7. Mittel gemäß Anspruch 7, dadurch gekennzeichnet, dass die Verpackung in Schlauchform oder Beutelform oder Seilform erfolgt.
8. Verfahren zur Herstellung von Mitteln gemäß Anspruch 1, dadurch gekennzeichnet, dass man
   a) einen insektiziden Wirkstoff aus der Reihe der Verbindungen der Formeln 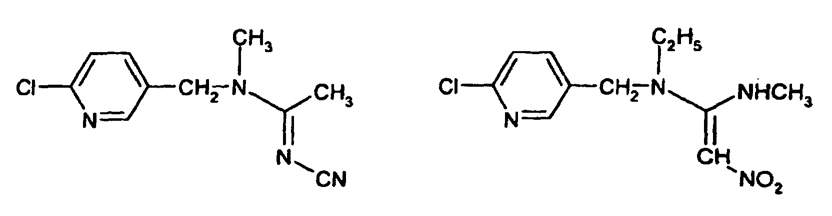 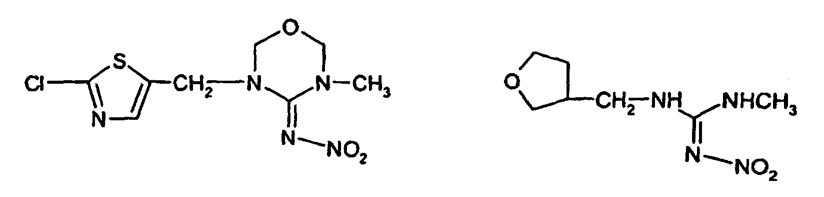 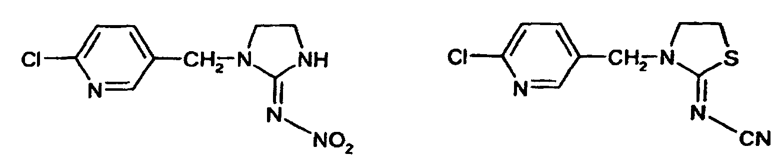 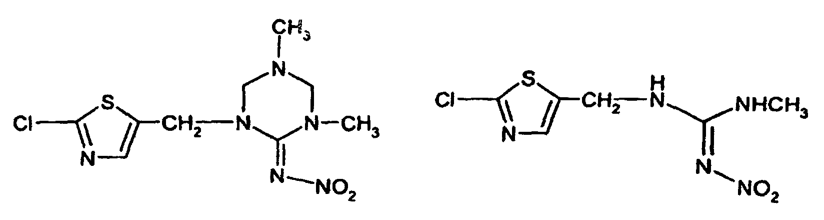
   b) ein Trägermaterial mit einer Komgröße von maximal 10 mm, wobei das Trägermaterial ein organischer Naturstoff oder organisch synthetischer Stoff aus der Reihe Sägemehl, Holzspäne oder -schnitzel, Rindenmulch, -späne oder -schnitzel, Torf, Lignin, Kokosfiber und Kokosmehl ist,
   c) gegebenenfalls mikrobizide Wirkstoffe,
   d) gegebenenfalls Lockstoffe oder entwicklungshemmende Stoffe für Insekten und
   f) gegebenenfalls Formulierhilfsmittel miteinander vermischt.
9. Verfahren zum Schutz von Gebäuden gegen holzzerstörende Insekten, dadurch gekennzeichnet, dass man Mittel gemäß Anspruch 1 auf den Boden streut oder in den Boden einarbeitet, oder als wässrige Suspension auf den Boden ausbringt.

Die erfindungsgemäßen Mittel enthalten einen oder mehrere agrochemische insektizide Wirkstoffe aus der Reihe der Agonisten oder Antagonisten der nicotinergen Acetylcholinrezeptoren von Insekten.

Agonisten oder Antanogisten der nicotinergen Acetylcholinrezeptoren von Insekten sind bekannt z.B. aus Europäische Offenlegungsschriften Nr. 580 553, 464 830, 428 941, 425 978, 386 565, 383 091, 375 907, 364 844, 315 826, 259 738, 254 859, 235 725, 212 600, 192 060, 163 855, 154 178, 136 636, 303 570, 302 833, 306 696, 189 972, 455 000, 135 956, 471 372, 302 389; Deutsche Offenlegungsschriften Nr. 3 639 877, 3 712 307; Japanische Offenlegungsschriften Nr. 03 220 176, 02 207 083, 63 307 857, 63 287 764, 03 246 283, 04 9371, 03 279 359, 03 255 072; US-Patentschriften Nr. 5 034 524, 4 948 798, 4 918 086, 5 039 686, 5 034 404; PCT-Anmeldungen Nr. WO 91/17 659, 91/4965; Französische Anmeldung Nr. 2 611 114; Brasilianische Anmeldung Nr. 88 03 621.

Auf die in diesen Publikationen beschriebenen Verbindungen und ihre Herstellung wird hiermit ausdrücklich Bezug genommen.

Im einzelnen seien folgende Verbindungen genannt:

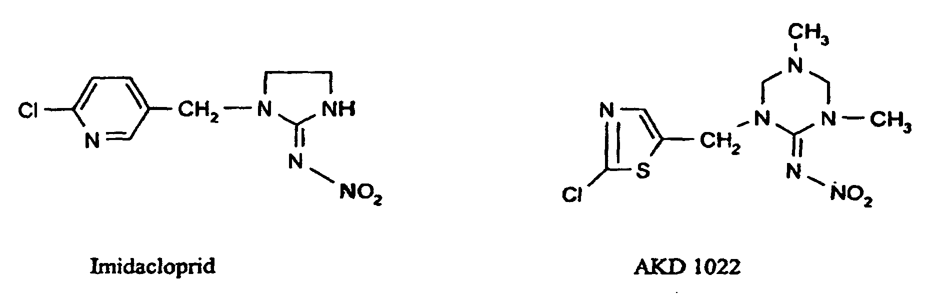

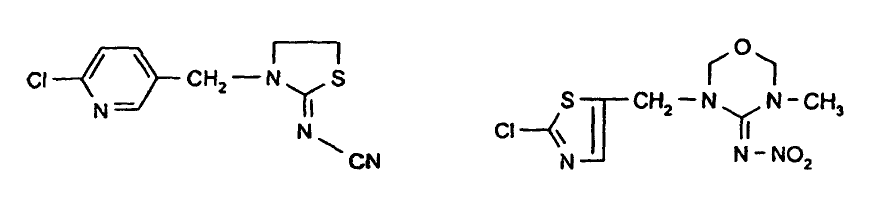

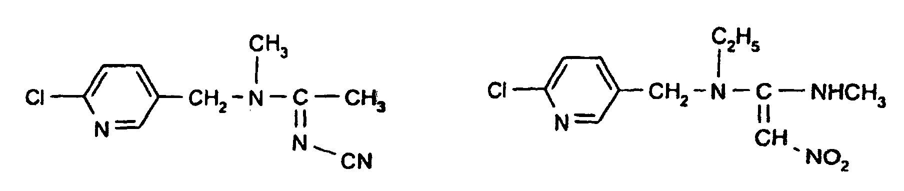

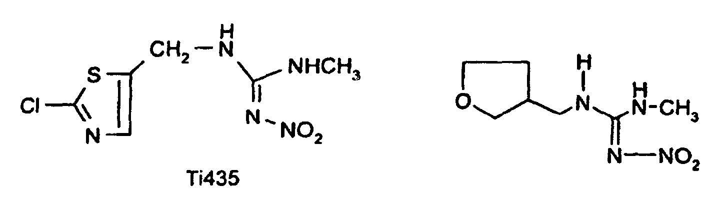

Besonders hervorgehoben seien die Verbindungen

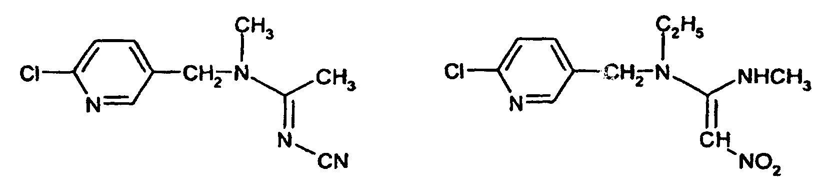

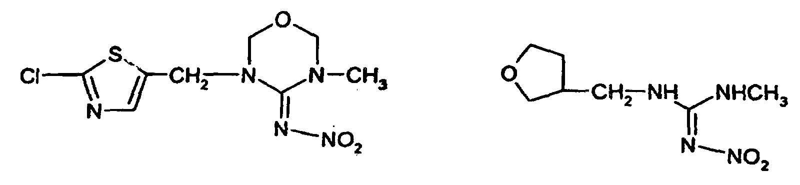

Weiterhin besonders hervorgehoben seien die Verbindungen 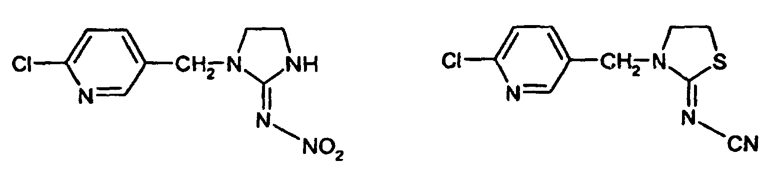 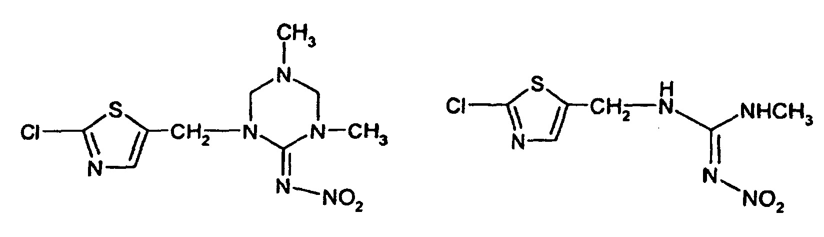 Die erfindungsgemäßen Mittel können gegebenenfalls noch weitere Insektizide und gegebenenfalls noch ein oder mehrere Mikrobizide enthalten.

Dabei kommen vorzugsweise die in der WO 94/29 268 genannten Insektizide und Fungizide in Frage. Die in diesem Dokument genannten Verbindungen sind ausdrücklich Bestandteil der vorliegenden Anmeldung.

Ganz besonders hervorgehoben seien die Insektizide Chlorpyriphos, Phoxim, Silafluofin, Alphamethrin, Cyfluthrin, Cypermethrin, Deltamethrin, Isofenphos, Fenamiphos, Permethrin, Imidacloprid, NI-25, Flufenoxuron, Hexaflumuron und Triflumuron, sowie die Fungizide Epoxyconazole, Fenaminosulf, Natrium[4-(dimethylamino)phenyl]diazenesulfonat, Hexaconazole, Azaconazole, Propiconazole, Tebuconazole, Cyproconazole, Metconazole, Imazalil, Dichlorfluanid, Tolylfluanid, 3-Iod-2-propinyl-butylcarbamat, N-Octyl-isothiazolin-3-on und 4,5-Dichlor-N-octylisothiazolin-3-on.

Die erfindungsgemäßen Mittel zeigen hohe insektizide Wirkung gegen Insekten, die technische Materialien zerstören.

Beispielhaft und vorzugsweise - ohne jedoch zu limitieren - seien die folgenden Insekten genannt:
Käfer wie
   Hylotrupes bajulus, Chlorophorus pilosis, Anobium punctatum, Xestobium rofovillosum, Ptilinus pecticornis, Dendrobium pertinex, Emobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus
Hautflügler wie
   Sirex juvencus, Urocerus gigas, Urocerus gigas taignus, Urocerus augur
Termiten wie
   Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus.

Borstenschwänze, wie Lepisma saccharina.

Unter technischen Materialien sind im vorliegenden Zusammenhang nicht lebende Materialien zu verstehen, wie vorzugsweise Kunststoffe, Klebstoffe, Leime, Papiere und Kartone, Leder, Holz und Holzverarbeitungsprodukte und Anstrichmittel.

Ganz besonders bevorzugt handelt es sich bei dem vor Insektenbefall zu schützenden Material um Holz und Holzverarbeitungsprodukte sowie um holzenthaltende Gebäude oder Gebäudeteile.

Unter Holz und Holzverarbeitungsprodukten, welche durch das erfindungsgemäße Mittel bzw. dieses enthaltende Mischungen geschützt werden kann, ist beispielhaft zu verstehen: Bauholz, Holzbalken, Eisenbahnschwellen, Brückenteile, Bootsstege, Holzfahrzeuge, Kisten, Paletten, Container, Telefonmasten, Holzverkleidungen, Holzfenster und -türen, Sperrholz, Spanplatten, Tischlerarbeiten oder Holzprodukte, die ganz allgemein beim Hausbau, Schiffbau oder in der Bautischlerei Verwendung finden.

Als Trägermaterial der erfindungsgemäßen Mittel dienen organische Naturstoffe oder organisch synthetische Stoffe. Als solche seien poröse organische Trägerstoffe genannt wie Sägemehl, Holzspäne oder -schnitzel, Rindenmehl, -späne oder -schnitzel, Torf, Lignin, Kokosfiber und Kokosmehl.

Das Trägermaterial hat eine Korngröße von maximal 10 mm. Die erfindungsgemäßen Mittel werden dann trocken oder in biologisch abbaubaren oder wasserlöslichen Folien verpackt angewendet.

Das Trägermaterial weist bevorzugt eine Korngröße von bis zu 0,2 mm auf Die erfindungsgemäßen Mittel werden dann trocken oder in biologisch abbaubaren Folien verpackt angewendet. Sie können aber auch in Wasser suspendiert oder mit Schaummittel mit geeigneten Spritzen oder Pumpen in den Boden z.B. entlang oder unter der Grundmauern, Fundamenten und Stein- oder Betondecken von Gebäuden ausgebracht werden. Mittel mit einer Korngröße von 0,2 bis 10 mm können auf den Boden gestreut oder in den Boden eingearbeitet werden.

Die erfindungsgemäßen Mittel oder Konzentrate enthalten Wirkstoff in einer Konzentration von 0,0001 bis 95 Gew.-%, insbesondere 0,001 bis 60 Gew.-%.

Die Menge der eingesetzten Mittel ist von der Art und dem Vorkommen der Insekten und von dem Medium abhängig. Die optimale Einsatzmenge kann bei der Anwendung jeweils durch Testreihen ermittelt werden. Im allgemeinen ist es jedoch ausreichend 0,0001 bis 20 Gew.-%, vorzugsweise 0,001 bis 10 Gew.-%, des Wirkstoffs, bezogen auf das zu schützende Material, einzusetzen.

Die erfindungsgemäßen Mittel können Formulierhilfsmittel enthalten. Als solche seien genannt Lösungs- und/oder Verdünnungsmittel, Emulgatoren oder Netzmittel, Bindemittel, Fixiermittel oder Weichmacher.

Als Lösungs- und/oder Verdünnungsmittel dienen organisch-chemische Lösungsmittel oder Lösungsmittelgemische und/oder ölige oder ölartige schwer flüchtige organisch-chemische Lösungsmittel oder Lösungsmittelgemische und/oder ein polare organisch-chemische Lösungsmittel oder Lösungsmittelgemische und/oder Wasser und gegebenenfalls Emulgatoren und/oder Netzmittel.

Als organisch-chemische Lösungsmittel werden vorzugsweise ölige oder ölartige Lösungsmittel mit einer Verdunstungszahl über 35 und einem Flammpunkt oberhalb 30°C, vorzugsweise oberhalb 45°C, eingesetzt. Als derartige schwerflüchtige, wasserunlösliche, ölige und ölartige Lösungsmittel werden entsprechende Mineralöle oder deren Aromatenfraktionen oder mineralölhaltige Lösungsmittelgemische, vorzugsweise Testbenzin, Petroleum und/oder Alkylbenzol verwendet.

Vorteilhaft gelangen Mineralöle mit einem Siedebereich von 170 bis 220°C, Testbenzin mit einem Siedebereich von 170 bis 220°C, Spindelöl mit einem Siedebereich von 250 bis 350°C, Petroleum bzw. Aromaten vom Siedebereich von 160 bis 280°C, Terpentinöl und dergleichen zum Einsatz.

In einer bevorzugten Ausführungsform werden flüssige aliphatische Kohlenwasserstoffe mit einem Siedebereich von 180 bis 210°C oder hochsiedende Gemische von aromatischen und aliphatischen Kohlenwasserstoffen mit einem Siedebereich von 180 bis 220°C und/oder Spindeöl und/oder Monochlornaphthalin, vorzugsweise α-Monochlomaphthalin, verwendet.

Die organischen schwerflüchtigen öligen oder ölartigen Lösungsmittel mit einer Verdunstungszahl über 35 und einem Flammpunkt oberhalb 30°C, vorzugsweise oberhalb 45°C, können teilweise durch leicht oder mittelflüchtige organisch-chemische Lösungsmittel ersetzt werden, mit der Maßgabe, dass das Lösungsmittelgemisch ebenfalls eine Verdunstungszahl über 35 und einen Flammpunkt oberhalb 30°C, vorzugsweise oberhalb 45°C, aufweist und dass das Insektizid-Fungizid-Gemisch in diesem Lösungsmittelgemisch löslich oder emulgierbar ist.

Nach einer bevorzugten Ausführungsform wird ein Teil des organisch-chemischen Lösungsmittel oder Lösungsmittelgemisches oder ein aliphatisches polares organisch-chemisches Lösungsmittel oder Lösungsmittelgemisch ersetzt. Vorzugsweise gelangen Hydroxyl- und/oder Ester- und/oder Ethergruppen enthaltende aliphatische organisch-chemische Lösungsmittel wie beispielsweise Glycolether, Ester oder dergleichen zur Anwendung.

Als organisch-chemische Bindemittel werden die an sich bekannten wasserverdünnbaren und/oder in den eingesetzten organisch-chemischen Lösungsmitteln löslichen oder dispergier- bzw. emulgierbaren Kunstharze und/oder bindende trocknende Öle, insbesondere Bindemittel bestehend aus oder enthaltend ein Acrylatharz, ein Vinylharz, z.B. Polyvinylacetat, Polyesterharz, Polykondensations- oder Polyadditionsharz, Polyurethanharz, Alkydharz bzw. modifiziertes Alkydharz, Phenolharz, Kohlenwasserstoffharz wie IndenCumaronharz, Siliconharz, trocknende pflanzliche und/oder trocknende Öle und/oder physikalisch trocknende Bindemittel auf der Basis eines Natur- und/oder Kunstharzes verwendet.

Das als Bindemittel verwendete Kunstharz kann in Form einer Emulsion, Dispersion oder Lösung, eingesetzt werden. Als Bindemittel können auch Bitumen oder bituminöse Substanzen bis zu 10 Gew.-%, verwendet werden. Zusätzlich können an sich bekannte Farbstoffe, Pigmente, wasserabweisende Mittel, Geruchskorrigentien und Inhibitoren bzw. Korrosionsschutzmittel und dergleichen eingesetzt werden.

Bevorzugt ist als organisch-chemische Bindemittel mindestens ein Alkydharz bzw. modifiziertes Alkydharz und/oder ein trocknendes pflanzliches Öl im Mittel oder im Konzentrat enthalten. Bevorzugt werden gemäß der Erfindung Alkydharze mit einem Ölgehalt von mehr als 45 Gew.-%, vorzugsweise 50 bis 68 Gew.-%, verwendet.

Das erwähnte Bindemittel kann ganz oder teilweise durch ein Fixierungsmittel(gemisch) oder ein Weichmacher(gemisch) ersetzt werden. Diese Zusätze sollen einer Verflüchtigung der Wirkstoffe sowie einer Kristallisation bzw. Ausfällen vorbeugen. Vorzugsweise ersetzen sie 0,01 bis 30 % des Bindemittels (bezogen auf 100% des eingesetzten Bindemittels).

Die Weichmacher stammen aus den chemischen Klassen der Phthalsäureester wie Dibutyl-, Dioctyloder Benzylbutylphthalat, Phosphorsäureester wie Tributylphosphat, Adipinsäureester wie Di-(2-ethylhexyl)-adipat, Stearate wie Butylstearat oder Amylstearat, Oleate wie Butyloleat, Glycerinether oder höhermolekulare Glykolether, Glycerinester sowie p-Toluolsulfonsäureester.

Fixierungsmittel basieren chemisch auf Polyvinylalkylethern wie z.B. Polyvinylmethylether oder Ketonen wie Benzophenon, Ethylenbenzophenon.

Als Lösungs- bzw. Verdünnungsmittel kommt insbesondere auch Wasser in Frage, gegebenenfalls in Mischung mit einem oder mehreren der oben genannten organisch-chemischen Lösungs- bzw. Verdünnungsmittel, Emulgatoren und Dispergatoren.

Die erfindungsgemäßen Mittel werden z.B. hergestellt indem man die Wirkstoffe in Pulverform zusammenmischt oder in geeigneten Lösungsmitteln löst, Formulierhilfsmittel zusetzt und mit den Trägerstoffen vermischt. Die Reihenfolge der Zugabe der Bestandteile ist dabei beliebig.

Die als Verpackungsmittel erwähnten wasserlöslichen Polymerfolien sind bekannt. Es handelt sich um Folien aus den Polymeren Polyvinylalkohol, z.B. Ethylenphenylalkohol.

Die Verpackung erfolgt in der Form von Schläuchen, die gegebenenfalls segmentiert sind. Der Durchmesser der Schläuche beträgt 1 bis 20 cm, bevorzugt 2 bis 10 cm. Die Segmentlänge beträgt 5 bis 30 cm, bevorzugt 10 bis 20 cm.

Die Verpackung kann z.B. auch in Form von Beuteln erfolgen.

Im Falle der Adsorption auf oder in Kokosfasern kann die Anwendung als Seil, gewebte Matten oder in Form lockerer Fasern oder als Pulver erfolgen.

## Patentansprüche

1. Mittel gegen holzzerstörende Insekten, die **dadurch gekennzeichnet sind, dass** sie
a) einen insektiziden Wirkstoff aus der Reihe der Verbindungen der Formeln 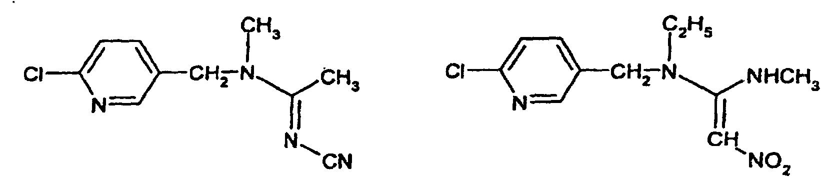 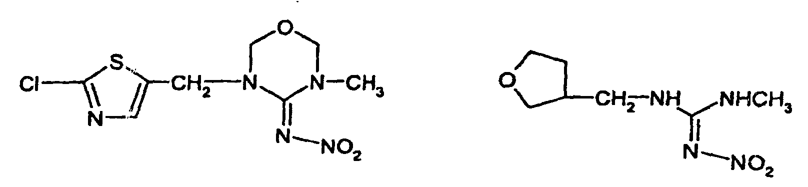 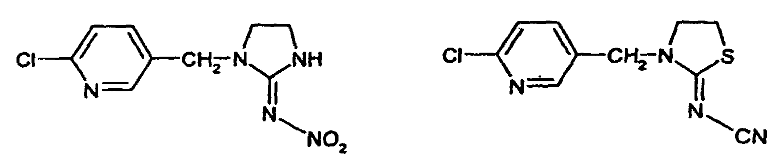 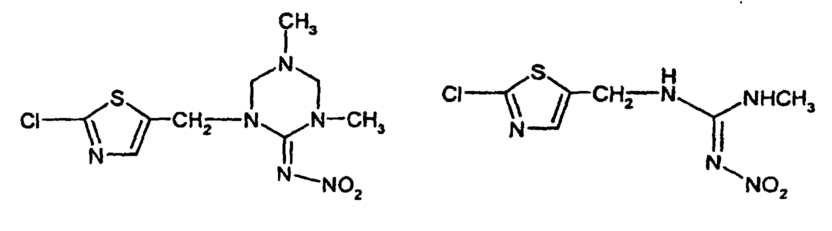
b) ein Trägermaterial mit einer Korngröße von maximal 10 mm, wobei das Trägermaterial ein organischer Naturstoff oder organisch synthetischer Stoff aus der Reihe Sägemehl, Holzspäne oder -schnitzel, Rindenmulch, -späne oder -schnitzel, Torf, Lignin, Kokosfiber und Kokosmehl ist,
c) gegebenenfalls mikrobizide Wirkstoffe,
d) gegebenenfalls Lockstoffe oder entwicklungshemmende Stoffe für Insekten und
e) gegebenenfalls Formulierhilfsmittel enthalten.

2. Mittel gemäß Anspruch 1, **dadurch gekennzeichnet, dass** als insektizider Wirkstoff Imidachloprid der Formel 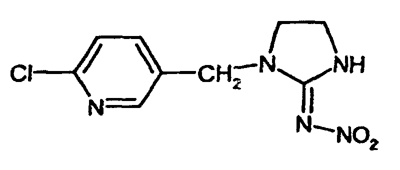 verwendet wird.

3. Mittel gemäß Anspruch 1, **dadurch gekennzeichnet, dass** als insektizider Wirkstoff die Verbindung der Formel 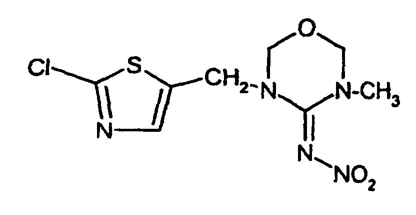 verwendet wird.

4. Mittel gemäß Anspruch 1, **dadurch gekennzeichnet, dass** als insektizider Wirkstoff die Verbindung der Formel 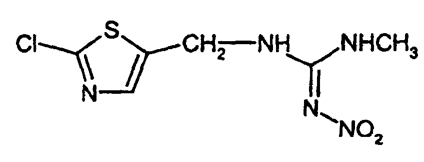 verwendet wird.

5. Mittel gemäß Anspruch 1, **dadurch gekennzeichnet, dass** es sich bei den holzzerstörenden Insekten um Termiten handelt.

6. Mittel gemäß Anspruch 1, **dadurch gekennzeichnet**, das sie in wasserlösliche Polymerfolien verpackt und in verpackter Form angewendet werden.

7. Mittel gemäß Anspruch 1, **dadurch gekennzeichnet, dass** die Verpackung in Schlauchform oder Beutelform oder Seilform erfolgt.

8. Verfahren zur Herstellung von Mitteln gemäß Anspruch 1, **dadurch gekennzeichnet, dass** man
a) einen insektiziden Wirkstoff aus der Reihe der Verbindungen der Formeln 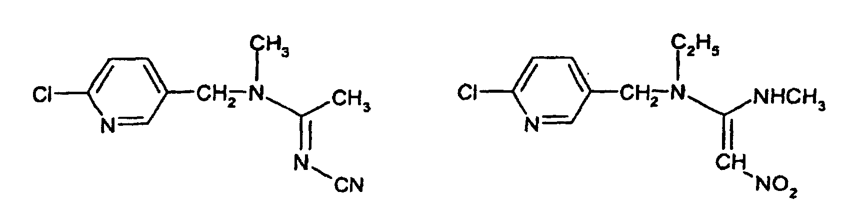 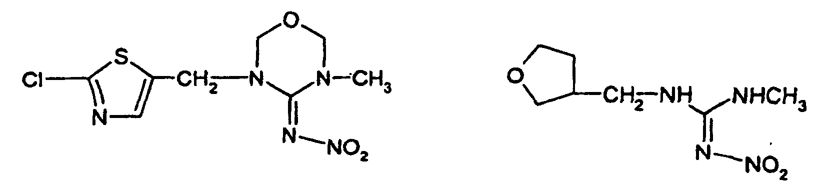 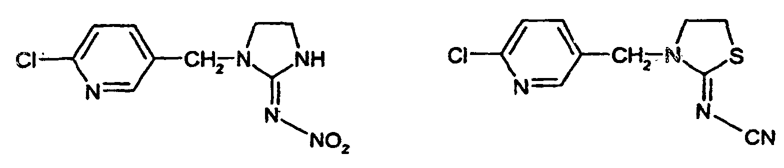 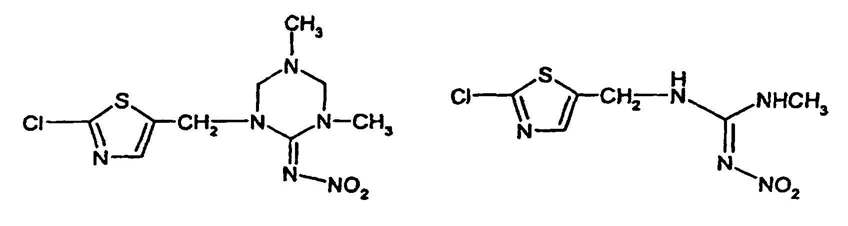
b) ein Trägermaterial mit einer Kerngröße von maximal 10 mm, wobei das Trägermaterial ein organischer Naturstoff oder organisch synthetischer Stoff aus der Reihe Sägemehl, Holzspäne oder -schnitzel, Rindenmulch, -späne oder -schnitzel, Torf, Lignin, Kokosfiber und Kokosmehl ist,
c) gegebenenfalls mikrobizide Wirkstoffe,
d) gegebenenfalls Lockstoffe oder entwicklungshemmende Stoffe für Insekten und
f) gegebenenfalls Formulierhilfsmittel miteinander vermischt.

9. Verfahren zum Schutz von Gebäuden gegen holzzerstörende Insekten, **dadurch gekennzeichnet, dass** man Mittel gemäß Anspruch 1 auf den Boden streut oder in den Boden einarbeitet, oder als wässrige Suspension auf den Boden ausbringt.

## Claims

1. Compositions against wood-destroying insects, **characterized in that** they contain
a) an insecticidally active compound from the group of the compounds of the formulae 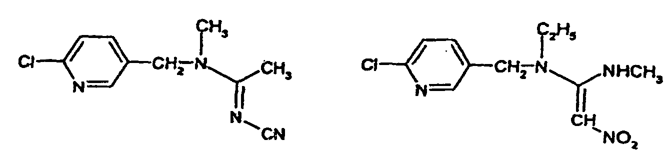 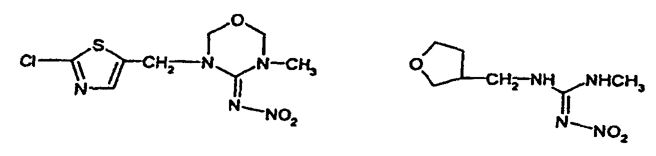 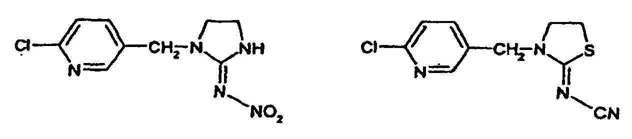 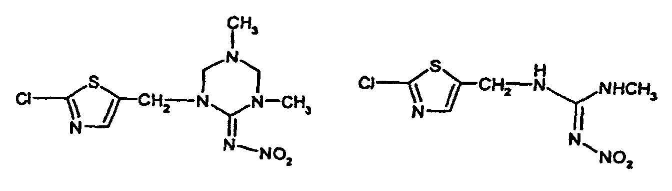
b) a carrier material having a particle size of at most 10 mm, the carrier material being an organic natural product or an organic synthetic compound from the group consisting of sawdust, wood chips or wood shavings, bark mulch, bark chips or bark shavings, peat, lignin, coconut fibre and coconut meal,
c) optionally microbicidally active compounds,
d) optionally attractants or development-inhibitory compounds for insects, and
e) optionally formulation auxiliaries.

2. Compositions according to Claim 1, **characterized in that** the insecticidally active compound used is imidacloprid of the formula

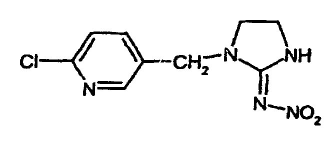

3. Compositions according to Claim 1, **characterized in that** the insecticidally active compound used is the compound of the formula

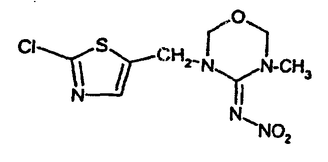

4. Compositions according to Claim 1, **characterized in that** the insecticidally active compound used is the compound of the formula

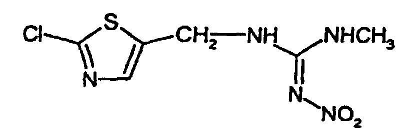

5. Compositions according to Claim 1, **characterized in that** the wood-destroying insects are termites.

6. Compositions according to Claim 1, **characterized in that** they are packaged in water-soluble polymer films and employed in packaged form.

7. Compositions according to Claim 1, **characterized in that** they are packaged in tubes or bags or ropes.

8. Process for preparing compositions according to Claim 1, **characterized in that**
a) an insecticidally active compound from the group of the compounds of the formulae 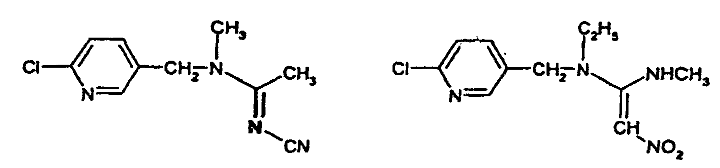 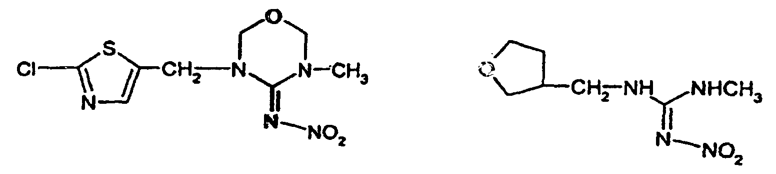 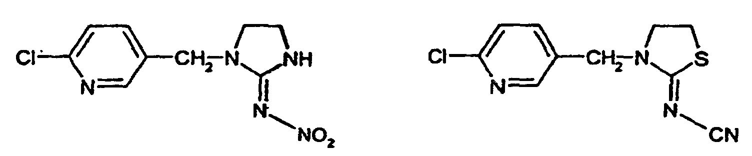 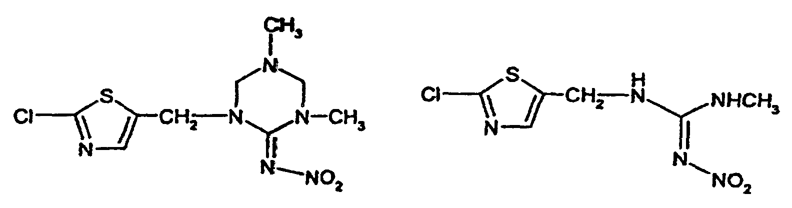
b) a carrier material having a particle size of at most 10 mm, the carrier material being an organic natural product or an organic synthetic compound from the group consisting of sawdust, wood chips or wood shavings, bark mulch, bark chips or bark shavings, peat, lignin, coconut fibre and coconut meal,
c) optionally microbicidally active compounds,
d) optionally attractants or development-inhibitory compounds for insects, and
e) optionally formulation auxiliaries
are mixed with one another.

9. A method for protecting buildings against wood-destroying insects, **characterized in that** a composition according to Claim 1 is broadcast on the floor or incorporated into the floor or applied to the floor as an aqueous suspension.

## Revendications

1. Compositions contre des insectes détruisant le bois, qui contiennent
a) une substance insecticide active de la série des composés de formules 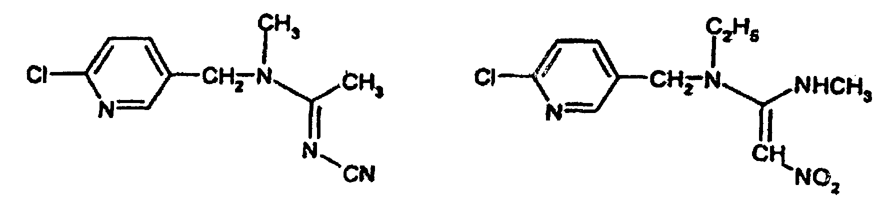 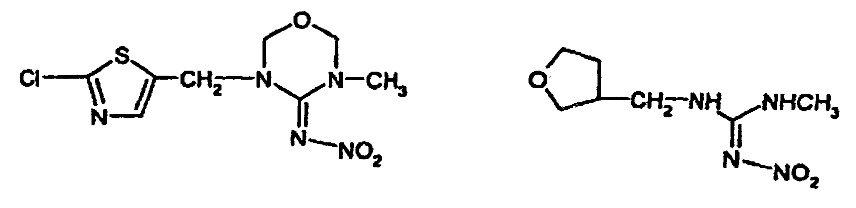 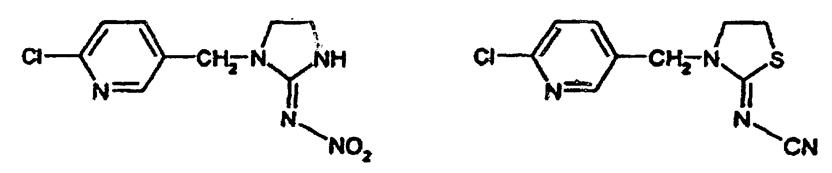 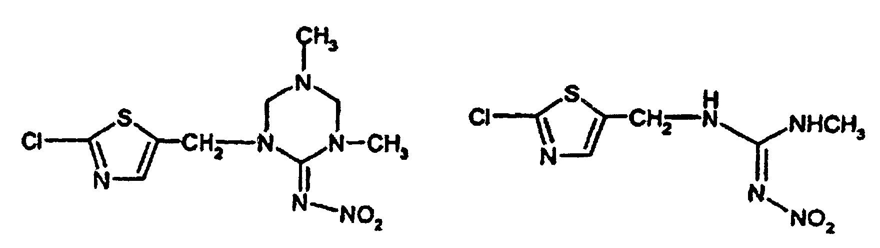
b) une matière de support en grains de diamètre maximal égal à 10 mm, cette matière de support étant une substance organique naturelle ou une substance de synthèse organique de la série de la sciure de bois, des copeaux ou râpures de bois, d'un paillis, de copeaux ou de râpures d'écorces, de la tourbe, de la lignine, des fibres de coprah et de la poudre de coprah,
c) le cas échéant, des substances actives microbicides,
d) le cas échéant, des attractifs sexuels ou des substances inhibant le développement des insectes et
e) le cas échéant, des auxiliaires de formulation. "

2. Compositions suivant la revendication 1, **caractérisées en ce que** l'imidachlopride de formule 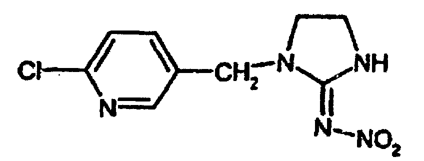 est utilisée comme substance active insecticide.

3. Compositions suivant la revendication 1, **caractérisées en ce que** le composé de formule 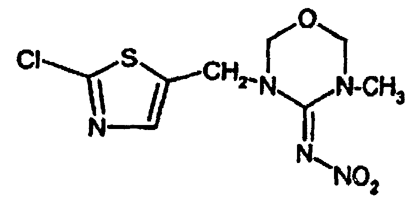 est utilisé comme substance active insecticide.

4. Compositions suivant la revendication 1, **caractérisées en ce que** le composé de formule 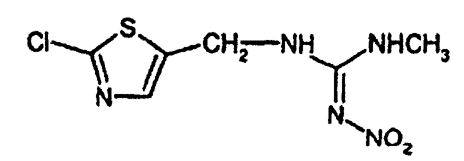 est utilisé comme substance active insecticide.

5. Compositions suivant la revendication 1, **caractérisées en ce que** les insectes détruisant le bois sont des termites.

6. Compositions suivant la revendication 1, **caractérisées en ce qu'**elles sont conditionnées en des feuilles en polymère hydrosoluble et utilisées sous la forme conditionnée.

7. Compositions suivant la revendication 1, **caractérisées en ce que** le conditionnement est effectué sous forme de boyaux ou de poches ou de câbles.

8. Procédé de production de compositions suivant la revendication 1, **caractérisé en ce qu'**on mélange ensemble
a) une substance active insecticide de la série des composés de formules 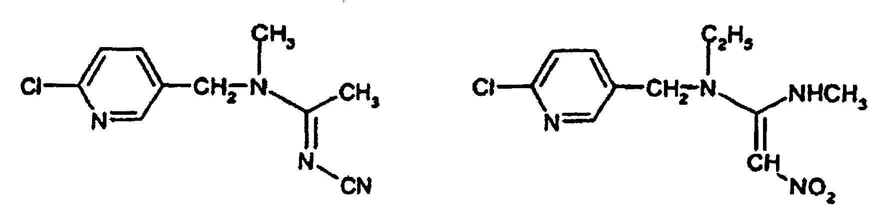 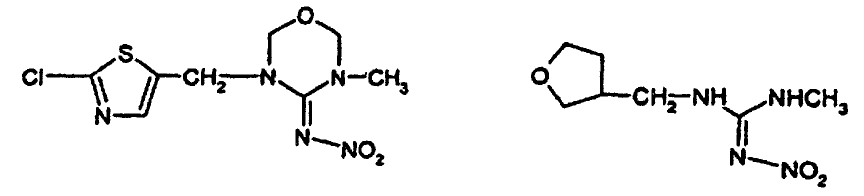 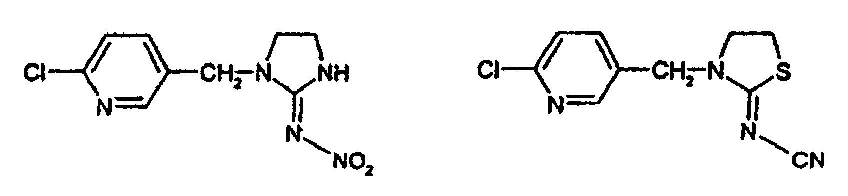 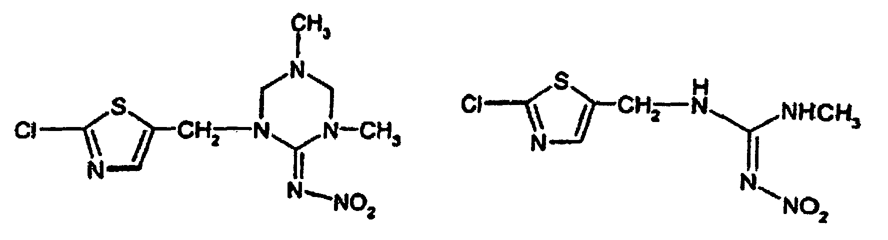
b) une matière de support en grains de diamètre maximal de 10 mm, la matière de support étant une matière organique naturelle ou une matière de synthèse organique de la série de la sciure, des copeaux ou des râpures de bois, de paillis, de copeaux ou de râpures d'écorces, de la tourbe, de la lignine, des fibres de coprah et de la poudre de coprah,
c) le cas échéant, des substances actives microbicides,
d) éventuellement des attractifs sexuels ou des substances inhibitrices de développement des insectes et
f) le cas échéant, des substances auxiliaires de formulation.

9. Procédé pour la protection de bâtiments contre des insectes détruisant le bois, **caractérisé en ce que** des compositions suivant la revendication 1 sont répandues sur le sol ou incorporées au sol, ou appliquées sur le sol sous forme de suspension aqueuse.
